# FASCICULE DE BREVET EUROPEEN

(11) **EP 3 828 428 B1**
(45) Date de publication et mention de la délivrance du brevet: **25.10.2023**
(21) Numéro de dépôt: 20209194.8
(22) Date de dépôt: 23.11.2020
(51) Int. Cl.: F16C 11/04, F16C 7/02, F16C 9/03, F16C 9/06, F16C 11/06, F16C 11/08

(54) **DISPOSITIF DE LIAISON COMPRENANT UNE CHAPE BOULONNÉE ET UNE BAGUE DÉFORMABLE DANS LA CHAPE**
VERBINDUNGSVORRICHTUNG MIT VERSCHRAUBTEM GABELKOPF UND EINEM VERFORMBAREN RING IM GABELKOPF
LINKING DEVICE COMPRISING A BOLTED YOKE AND A DEFORMABLE RING IN THE YOKE

(30) Priorité: 28.11.2019 FR 1913410
(43) Date de publication de la demande: 02.06.2021
(73) Titulaire: AIRBUS OPERATIONS (SAS), 31060 Toulouse (FR)
(72) Inventeur: GOUPIL, Frédéric, 31060 TOULOUSE (FR)
(74) Mandataire: Cabinet Le Guen Maillet

(56) Documents cités:
- US-A- 1 954 277
- US-A- 2 659 619
- US-A- 2 824 464

## Description

Le sujet de l'invention est un dispositif de liaison comprenant une chape boulonnée et une bague déformable dans la chape, connu par exemple du document US 2 659 619 A.

De tels dispositifs peuvent être utilisés dans l'aéronautique pour fixer notamment l'extrémité d'une entretoise d'étayage ou d'une autre pièce longiligne à une autre pièce telle qu'une structure de support, afin de transmettre un effort dans la direction d'extension de l'entretoise. Des applications non limitatives peuvent être l'attache ou le support de planchers, équipements, carénages ventraux, ou autres, à la structure d'un aéronef, et d'une façon générale tous les raccords où on souhaite éliminer les jeux.

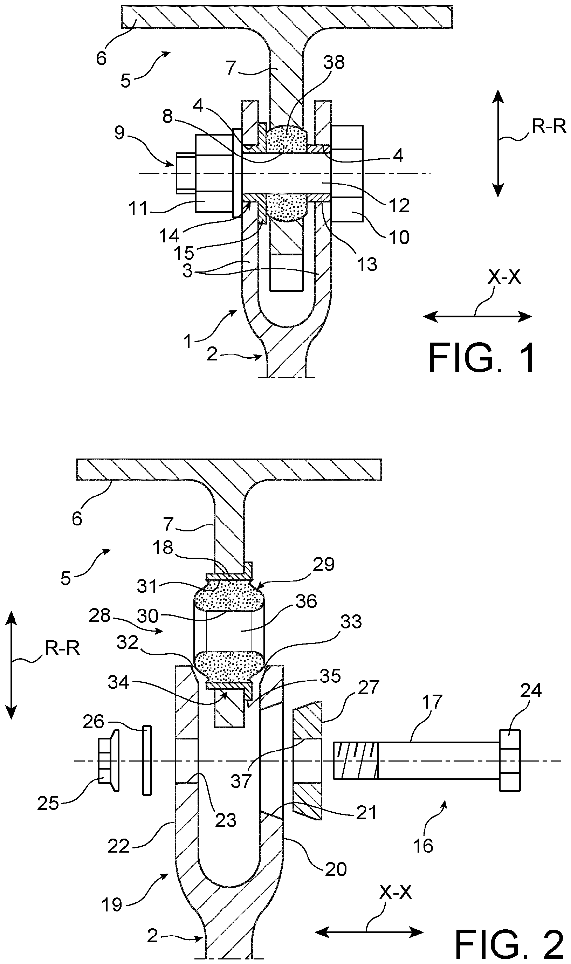

Un dispositif connu et illustré à la figure 1 comprend une chape 1, formant un raccord femelle, à l'extrémité d'une première pièce 2 parmi les deux pièces à assembler, par exemple l'entretoise longiligne. La chape 1 est dotée de deux joues 3 planes et parallèles dont chacune est traversée par un perçage 4, les perçages 4 étant alignés et de même rayon. La première pièce 2 est assemblée à une seconde pièce 5 de l'assemblage, qui peut être une plaque 6 ou une autre structure de support, ici perpendiculaire à la première pièce 2 quand le montage est réalisé, et qui comprend un raccord 7 saillant comprenant un perçage 8 et formant un raccord mâle avec la chape 1. L'assemblage est accompli principalement par un boulon 9 dont une tête 10 et un écrou 11 de serrage s'appuient sur les faces externes des joues 3. Une tige 12 du boulon 9 traverse les perçages 4 et 8, qui sont alors alignés. L'assemblage est complété par deux douilles 13 et 14, toutes deux entourant la tige 12 et dont la première 13 est disposée dans le perçage 4 d'une des joues 3, et l'autre 14 est disposée dans le perçage 4 de l'autre des joues 3 ; cette dernière comprend à un bord une collerette 15 saillant autour de sa périphérie.

Un montage rigide est obtenu dans la direction axiale (X-X) de la tige 12 et de l'alignement des perçages du boulon 9, la première douille 13 étant comprimée entre le raccord 7 et la tête 10, et la seconde douille 14 étant comprimée entre le raccord 7 et l'écrou 9 ; de plus, la collerette 15 est comprimée entre le raccord 7 et la joue 3 adjacente, ce qui assure la position du raccord 7 dans cette direction. On notera encore qu'une rotule 38 est incorporée au raccord 7 pour permettre de petits ajustements d'orientation de la première pièce 2 par rapport à celui-ci.

Les douilles 13 et 14 comprimées contribuent à absorber les jeux axiaux dans l'assemblage, mais des jeux radiaux (dans la direction radiale R-R perpendiculaire à la direction axiale X-X) subsistent entre la tige 12 du boulon 9 d'une part, et la rotule 38 du raccord 7 et éventuellement les douilles 13 et 14 d'autre part, même si ces dernières sont comprimées.

Un objet de l'invention est de proposer un dispositif de liaison du genre mentionné, qui soit amélioré sous cet aspect : il est fondé principalement sur le remplacement des douilles du dispositif commenté ci-dessus par un joint apte à mieux combler les jeux pouvant apparaître entre les pièces principales de l'assemblage. Un meilleur amortissement contre les vibrations et le bruit pendant le service de l'aéronef peut être espéré. Ce joint est par ailleurs de constitution plus simple, et il autorise un montage simple et rapide de l'assemblage, ainsi que quelque souplesse d'ajustement de position ou d'orientation entre les deux pièces.

Un aspect général de l'invention est ainsi un dispositif de liaison entre une première pièce, porteuse d'une chape à deux joues munies de perçages alignés, et une seconde pièce à extrémité munie d'un perçage, le dispositif comprenant, à un état de montage de la liaison, un boulon dont une tige traverse les perçages des joues et le perçage de l'extrémité aligné entre les perçages des joues dans une direction axiale, le boulon étant serré de part et d'autre des joues ; et le dispositif étant caractérisé en ce que : une rondelle, en appui sur le boulon, pénètre dans le perçage de la première des joues ; et le dispositif comprend encore un joint qui, à l'état de liaison, est fixé dans le perçage du raccord, ledit joint comprend une bague déformable munie d'un évidement traversé par la tige du boulon, la bague étant serrée radialement contre la tige du boulon et serrée axialement entre la rondelle et la seconde des joues autour du perçage de la seconde des joues à l'état de montage.

Un effet important obtenu au montage du dispositif est une compression de la bague déformable dans sa direction axiale, qui produit alors une dilatation dans la direction radiale, apte à combler les jeux radiaux dans l'assemblage, surtout avec la surface de la tige du boulon. Le joint procure une liaison directe et ferme entre les deux pièces, en s'appuyant avec pression sur au moins une des joues et en étant étroitement ajusté dans le perçage du raccord mâle. Il enserre de plus la tige du boulon. Les douilles dans les perçages des joues deviennent inutiles et sont éliminées. Des petits mouvements relatifs entre les deux pièces restent possibles pour tolérer des ajustements de position ou d'orientation, grâce à la souplesse de l'élastomère. Les efforts dynamiques ne s'accompagnent pas de bruits ni de vibrations importantes grâce à l'amortissement procuré par l'élastomère. La rotule 38 devient inutile. Si le matériau de la bague est peu compressible ou incompressible (de l'élastomère par exemple, incompressible), une compression axiale modérée suffit à produire une dilatation radiale suffisante.

Un autre aspect de l'invention est un ensemble de liaison, apte à donner le dispositif ci-dessus à l'état monté, et comprenant une entretoise à deux extrémités opposées, où l'entretoise comprend, à au moins une des extrémités, une chape à deux joues parallèles munies de perçages alignés dans une direction axiale ; caractérisé en ce que l'ensemble comprend encore : un joint annulaire qui comprend une bague déformable munie d'un évidement; un boulon dont une tige est apte à traverser l'évidement de la bague et les perçages des joues ; une rondelle apte à pénétrer dans le perçage de la première des joues et sur laquelle le boulon est apte à prendre appui ; la bague ayant une première extrémité axiale de rayon plus petit que le perçage de la première des joues, et une seconde extrémité axiale de rayon plus grand que le perçage de la seconde des joues.

Selon divers aspects optionnels de l'invention :
- la bague possède des extrémités axiales alignées avec une partie intermédiaire de la bague dans la direction axiale, saillant du raccord de la seconde pièce dans la direction axiale et ayant des sections s'élargissant progressivement vers la partie intermédiaire de la bague ;
- les sections des extrémités axiales de la bague sont arrondies ;
- la bague a une section approximativement elliptique où la partie intermédiaire est délimitée par un côté cylindrique radialement intérieur rectiligne en direction axiale de la bague et un côté cylindrique radialement extérieur rectiligne en direction axiale de la bague, des bords des extrémités axiales se joignent auxdits côtés cylindriques, et les extrémités axiales de la bague ont des bords axiaux plus proches, dans une direction radiale, du côté cylindrique radialement intérieur que du côté cylindrique radialement extérieur ;
- la bague a, à un état libre, une longueur, dans la direction axiale, plus grande qu'une distance entre les joues de la chape ;
- la tige du boulon a un rayon plus petit qu'un rayon de l'évidement de la bague à un état de démontage de la liaison, où la bague n'est pas serrée contre la rondelle ;
- la bague est en matériau essentiellement incompressible, notamment en caoutchouc ou en élastomère ;
- le joint comprend une douille entourant la bague, à laquelle la bague est fixée, et qui est engagée sans jeu dans le perçage du raccord à l'état de montage du dispositif ;
- la douille est munie d'une collerette saillant extérieurement à un bord de la douille ;
- la rondelle a un bord extérieur conique, et le perçage de la première des joues a un bord conique de même angle de conicité ;
- le perçage d'une première des joues a un rayon plus grand que le perçage d'une seconde des joues ;
- la rondelle est séparée du boulon ;
- une tête du boulon est en appui/apte à venir en appui sur la rondelle.

Un autre aspect de l'invention est une structure d'aéronef comprenant le dispositif ou l'ensemble de liaison, selon ce qui précède.

L'invention sera maintenant décrite en détail au moyen d'une réalisation préférée de celle-ci, en liaison aux figures suivantes :
Fig. 1 déjà décrite représente un dispositif de liaison à chape connu, en coupe transversale à travers la chape ;
Fig. 2 une réalisation de l'invention à l'état démonté, en coupe transversale à travers la chape ;
Fig. 3 un état intermédiaire de montage de cette réalisation dans la même coupe ;
Fig. 4 l'état monté de cette réalisation dans la même coupe ;
Fig. 5 une entretoise conforme à l'invention, dans une coupe transversale partielle d'un aéronef ;
Fig. 6 une vue semblable à celle de la figure 2, mais en perspective.

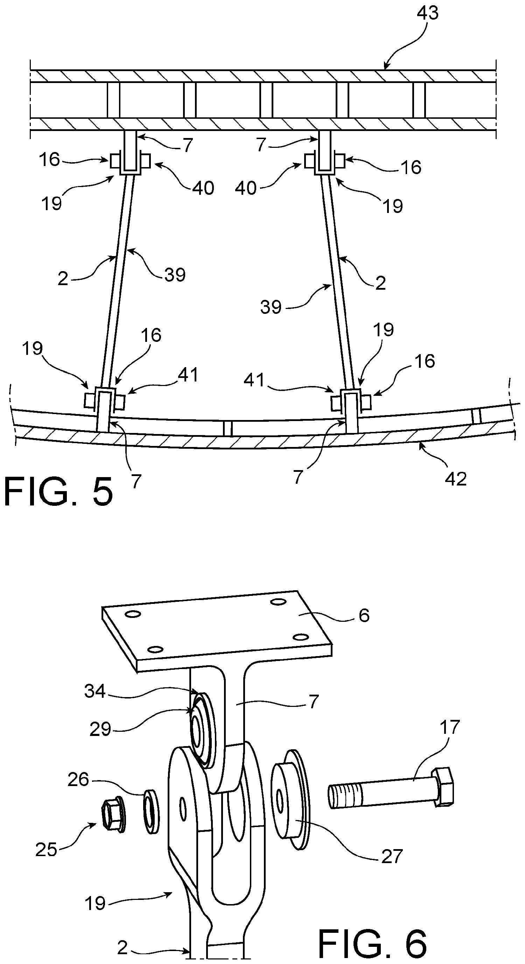

Le dispositif de l'invention est représenté (figures 2 et 6) pour la même application possible que celui de la figure 1, en reliant les pièces 2 et 5 ; celle-ci est de la même façon munie d'un raccord 7 saillant, mais dont le perçage 18 est ici droit et cylindrique et dépourvu de rotule ; et la chape 1 équipant la première pièce 2 est maintenant remplacée par une chape 19 un peu différente, dont une première joue 20 porte un premier perçage 21, et une seconde joue 22, parallèle à la précédente, porte un second perçage 23, de plus petit rayon que le précédent. De plus, le premier perçage 21 a un bord conique s'amenuisant vers l'intérieur de la chape 19.

L'assemblage est encore réalisé au moyen d'un boulon 16 comprenant une tige 17, une tête 24 à une extrémité de la tige 17, et, à l'autre extrémité de celle-ci, qui est filetée, un écrou 25. L'écrou 25 est destiné à s'appuyer sur la face extérieure de la seconde joue 22 par l'intermédiaire d'une rondelle 26 ; la tête 24 n'est toutefois pas destinée à s'appuyer sur la première joue 20, mais sur une rondelle 27 insérée dans le premier perçage 21, et dont le bord extérieur a une conicité identique à celui-ci.

Et l'assemblage comprend encore un joint 28 comprenant une partie principale qui est une bague 29 déformable, ici en élastomère, la bague ayant une section ici approximativement elliptique et comprenant une partie intermédiaire délimitée par un côté radialement intérieur 30 cylindrique et un côté radialement extérieur 31 cylindrique et plus court que le précédent, et deux extrémités axiales 32 et 33 aux extrémités de la partie intermédiaire en faisant saillie dans la direction axiale du joint 28, qui coïncide avec la direction axiale X-X déjà introduite et qui est celle de la tige (ici 17) et de l'alignement des perçages (ici 21 et 23). Les extrémités axiales 32 et 33 ont une section arrondie, à peu près semi-circulaire, et leur contour se raccorde aux extrémités des côtés radialement intérieur 30 et radialement extérieur 31. D'autres formes de la bague déformable seraient possibles, des sections arrondies aux extrémités longitudinales pouvant cependant être préférées pour faciliter un serrage progressif et une insertion plus facile dans la chape 19. L'élastomère est un matériau apprécié ici puisqu'il est non seulement déformable mais incompressible, bien élastique et de bonne résistance mécanique à l'écrasement, mais d'autres matériaux déformables, comme des polymères et en particulier des thermoplastiques, pourraient convenir, d'après les sollicitations mécaniques ou thermiques auxquelles la bague devrait résister. Le joint 28 comprend encore une douille extérieure 34 à laquelle la bague 29 est fixée par le côté radialement extérieur 31, et qui est munie d'une collerette 35 à une extrémité. Le côté radialement intérieur 30 reste dégagé pour venir directement au contact de la tige 17. Un évidement central de la bague 29, qu'entoure le côté radialement intérieur 30, porte la référence 36 et sa longueur s'étend aussi dans la direction axiale X-X.

A un état complètement démonté du dispositif, qui n'est pas représenté ici, le joint 28 est libre. Une première étape du montage consiste à l'insérer dans le perçage 18 du raccord 7. Comme la douille 34 n'a pas de jeu, ou a un léger jeu négatif, avec le perçage 18, l'ajustement se fait à la presse ou par un moyen analogue. Le joint 28 est alors fixé au raccord 7, à une position axiale déterminée par la butée de la collerette 35 contre une face latérale plane du raccord 7, et cette position reste invariable.

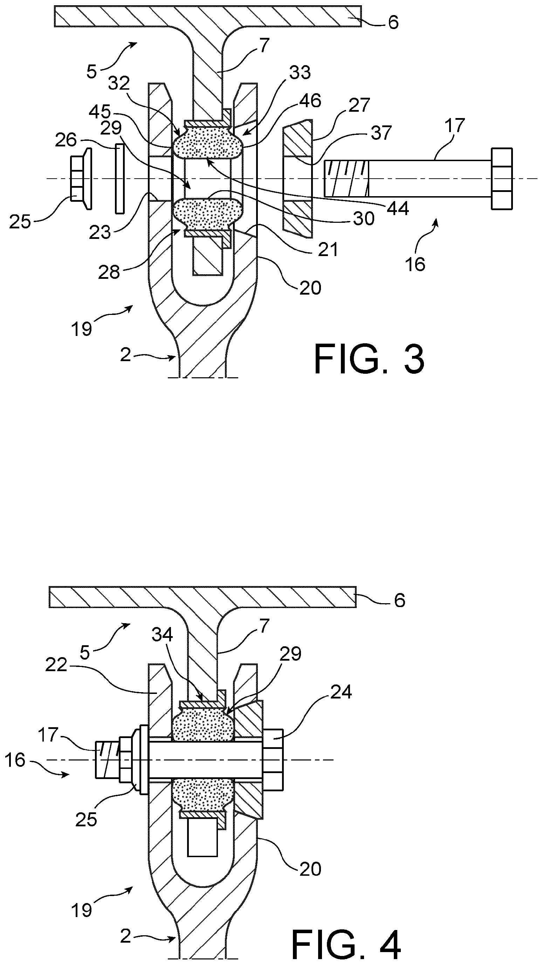

L'étape suivante du montage consiste à pousser le raccord 7 porteur du joint 28 dans la chape 19 jusqu'à réaliser l'alignement des perçages 21, 23 et 18 ainsi que de l'évidement 36 au centre de la bague 29 du joint 28, en donnant l'état représenté à la figure 3. La distance entre les extrémités axiales 32 et 33 dans la direction axiale X-X du joint 28 est un peu plus grande que l'écart entre les faces internes des joues 20 et 22, ce qui n'a pas empêché l'introduction du joint 28, grâce à la souplesse de l'élastomère et à la forme arrondie des extrémités axiales 32 et 33, en exerçant un petit effort.

L'étape finale du montage, donnant l'état de la figure 4, consiste à installer le boulon 16 et à le serrer. La tige 17 est enfilée dans les perçages 21, 23 et l'évidement 36 alignés, et aussi à travers un perçage 37 au centre de la rondelle 27. L'ajustement est à petit jeu avec le second perçage 23 et le perçage 37, et à jeu légèrement plus important avec l'évidement 36 à l'état desserré du boulon 16. Quand l'écrou 25 est vissé, il s'appuie par l'intermédiaire de la rondelle 27 sur la face externe de la seconde joue 20 tandis que la tête 24 s'appuie sur la face extérieure de la rondelle 27 et l'enfonce dans le premier perçage 21 jusqu'à la butée des faces coniques. La bague 29 du joint 28 a alors été comprimée dans la direction axiale X-X entre la rondelle 27 et la première joue 20 en repoussant ses extrémités axiales 32 et 33, avec la conséquence qu'elle s'est dilatée dans la direction radiale R-R. La dilatation radiale s'exerce vers l'intérieur puisqu'elle est empêchée dans le sens opposé par l'appui présent dès l'état initial, du côté radialement extérieur 31 sur la douille extérieure 34. La bague 29 est donc déformée pour enserrer la tige 17. Elle réalise aussi une liaison ferme et sans jeu, mais pourvue de souplesse, entre la chape 19 et le raccord 7 par l'intermédiaire de la rondelle 27 conique et de la douille extérieure 34, qui leur sont respectivement liées de façon fixe. La butée des faces coniques limite le serrage de la bague 29.

La figure 4 montre que la compression axiale de l'élastomère entre la seconde joue 19 et la rondelle 27, jointe à la compression de l'élastomère enserrant la tige 17, à l'absence de jeu entre le joint 28 et le perçage du raccord 7, et à la modicité des jeux entre la tige 17 et les perçages 23 et 37, donne un montage dépourvu de jeux et donc particulièrement peu apte à voir apparaître des efforts dynamiques de vibrations et de chocs entre le support 6 et l'entretoise 2, d'autant moins que l'élastomère a de bonnes facultés d'amortissement, qu'il s'adapte aux tolérances de forme ou de dimension des constituants de l'assemblage et qu'il absorbera aussi de petits déplacements éventuels de position ou d'orientation entre les deux pièces 2 et 5. Comme la bague 29 est de préférence incompressible (si par exemple elle est en élastomère) ou peu compressible, une compression axiale modérée suffit à produire la dilatation radiale suffisant à enserrer la tige 17.

Il convient ici de décrire plus longuement le phénomène mécanique exploité d'après l'invention, de conversion des déformations axiales de compression de la bague 29 en déformations radiales d'expansion, surtout vers l'intérieur, afin d'enserrer la tige 17. Cette conversion dépend en grande partie de facteurs de forme favorables dans le dispositif et surtout de la bague 29 pour se produire convenablement. On préconise que la bague 29 ait une forme régulière dans l'ensemble, sans discontinuité de direction ou d'épaisseur. Les bords des extrémités axiales 32 et 33 se raccordent à la partie intermédiaire par des jonctions lisses, sans angle vif, par exemple en s'épanouissant progressivement vers elle avec une forme arrondie. La partie intermédiaire s'étendant entre les extrémités axiales 32 et 33 est cylindrique d'épaisseur constante et de rayon constant. Cela permet aux extrémités axiales 32 et 33 et à la partie intermédiaire de se trouver en alignement axial, dans la direction de serrage, et permet aussi une transmission d'efforts uniformes de compression axiale dans la partie intermédiaire dont l'épaisseur est uniforme. Les extrémités axiales 32 et 33 diffusent les déformations de compression dans toute l'épaisseur de la partie intermédiaire grâce au contour régulier, presque semi-circulaire, de leur section, et à l'absence d'appui ou de contact quelconque sur les pièces voisines, en particulier sur la douille extérieure 34 et le raccord 7, parce que la partie intermédiaire est plus longue que la douille extérieure 34 et que le perçage 18 du raccord 7. Il faut encore remarquer que les extrémités axiales 32 et 33 ont des lignes de sommet circulaires dont le rayon est plus proche de celui du côté radialement intérieur 30 que du côté radialement extérieur 31, ce qui favorise l'expansion radiale vers l'intérieur de la bague 29 quand elle est comprimée.

Toutes ces caractéristiques contribuent à l'obtention d'une déformation radiale suffisante de la bague 29 vers l'intérieur quand elle est comprimée, garantissant un serrage ferme de la tige 17 pour des assemblages de formes et dimensions ordinaires. Ce résultat ne serait pas assuré avec des bagues élastiques quelconques, surtout les bagues courantes dans l'industrie, dont les extrémités s'élargissent radialement en collerettes plates reposant sur les pièces de l'assemblage.

Un autre facteur favorable est relatif à l'incompressibilité du matériau, c'est-à-dire à sa faculté d'être comprimé sans diminution de volume : le caoutchouc et en général les élastomères, étant absolument ou essentiellement incompressibles, ont la propriété de mieux convertir les déformations axiales de compression en déformations radiales d'expansion et sont donc préférés pour constituer la bague 29.

La figure 5 illustre plus complètement un autre aspect de l'invention : une entretoise composée, outre de la première pièce 2, qui est longiligne et droite, de deux extrémités 40, 41 opposées dont au moins l'une d'elles est équipée du dispositif de liaison déjà décrit, comprenant notamment une chape 19 équipée d'un boulon 16. Les pièces reliées par une ou plusieurs entretoises et porteuses des raccords 7 mâles peuvent être par exemple une structure raidie 42 d'un aéronef en bas, et un plancher 43 en haut ; bien d'autres applications sont possibles, les entretoises ainsi constituées à leur deux extrémités pouvant donc être considérées comme des bielles de liaison, aptes à transmettre un effort éventuellement important dans leur direction d'allongement. La souplesse de la bague 29 permet notamment un petit désalignement entre l'évidement 36 et les perçages 21 et 23 des joues 20 et 22 de la chape 19, en absorbant donc des tolérances de position des éléments de l'assemblage et notamment de longueur des entretoises. Une contrainte de montage sur la bague 29 est acceptée, mais qui est en principe faible par rapport aux contraintes subies en fonctionnement. Il sera beaucoup moins fréquent qu'avec les conceptions connues de devoir assurer l'assemblage par des mesures compliquées telles que le contre-perçage de la chape 19, ou l'ajustement de longueur de l'entretoise.

La rondelle 27 pourrait être intégrée au boulon 16 en étant d'une pièce avec la tête 24. La bague 29 pourrait être fixée au raccord 7 autrement que par la douille 34. Elle pourrait avoir une autre section qu'elliptique. La construction représentée ici est considérée comme avantageuse pour la simplicité de fabrication des éléments et de montage du dispositif. Bien des variantes de conception ou de réalisation de l'invention restent possibles.

## Revendications

1. Dispositif de liaison entre une première pièce (2), porteuse d'une chape (19) à deux joues (20, 22) munies de perçages (21, 23) alignés, et une seconde pièce (5) à raccord (7) muni d'un perçage (18), le dispositif comprenant, à un état de montage de la liaison, un boulon (16) dont une tige (17) traverse les perçages (21, 23) des joues (20, 22) et le perçage (18) du raccord (7) aligné entre les perçages des joues dans une direction axiale, le boulon (16) étant serré de part et d'autre des joues ; et le dispositif étant **caractérisé en ce que** : une rondelle (27), sur laquelle le boulon (16) s'appuie, pénètre dans le perçage de la première des joues (20) ; et le dispositif comprend encore un joint (28) annulaire qui, à l'état de liaison, est fixé dans le perçage (18) du raccord (7), ledit joint (28) comprend une bague (29) déformable munie d'un évidement (36) traversé par la tige du boulon, ladite bague (29) étant serrée radialement contre la tige (17) du boulon et serrée axialement entre la rondelle (27) et la seconde des joues (22) à l'état de montage, la bague (29) possédant des extrémités axiales (32, 33) alignées avec une partie intermédiaire de la bague dans la direction axiale, saillant du raccord (7) de la seconde pièce (5) dans la direction axiale et ayant des sections s'élargissant progressivement vers la partie intermédiaire de la bague.

2. Ensemble de liaison comprenant un dispositif de liaison selon la revendication 1, ladite première pièce étant une entretoise à deux extrémités opposées, où l'entretoise comprend, à au moins une des extrémités, ladite chape (19) à deux joues (20, 22) parallèles munies desdits perçages (21, 23) alignés dans une direction axiale ; la bague ayant une première extrémité axiale de rayon plus petit que le perçage de la première des joues, et une seconde extrémité axiale de rayon plus grand que le perçage de la seconde des joues.

3. Dispositif ou ensemble de liaison selon la revendication 1 ou 2, **caractérisé en ce que** les sections des extrémités axiales (32, 33) de la bague sont arrondies.

4. Dispositif ou ensemble de liaison selon l'une quelconque des revendications 1 à 3, **caractérisé en ce que** la bague (29) a une section approximativement elliptique où la partie intermédiaire est délimitée par un côté cylindrique radialement intérieur (30) rectiligne en direction axiale (X-X) de la bague et un côté cylindrique radialement extérieur (31) rectiligne en direction axiale de la bague, et les extrémités axiales de la bague ont des lignes circulaires de sommet plus proches, dans une direction radiale, du côté cylindrique radialement intérieur (30) que du côté cylindrique radialement extérieur (31).

5. Dispositif ou ensemble de liaison selon l'une quelconque des revendications 1 à 4, **caractérisé en ce que** la bague (29) a, à un état libre, une longueur, dans la direction axiale, plus grande qu'une distance entre les joues (20, 22) de la chape.

6. Dispositif ou ensemble de liaison selon l'une quelconque des revendications 1 à 5, **caractérisé en ce que** la tige (17) du boulon a un rayon plus petit qu'un rayon de l'évidement (36) de la bague (29) à un état de démontage de la liaison, où la bague (29) n'est pas serrée contre la rondelle (27).

7. Dispositif ou ensemble de liaison selon l'une quelconque des revendications 1 à 6, **caractérisé en ce que** la bague est en matériau essentiellement incompressible, notamment en caoutchouc ou en élastomère.

8. Dispositif ou ensemble de liaison selon l'une quelconque des revendications 1 à 7, **caractérisé en ce que** le joint comprend une douille (34) entourant la bague (29), à laquelle la bague est fixée, et qui est engagée sans jeu dans le perçage (18) du raccord (7) à l'état de montage du dispositif.

9. Dispositif ou ensemble de liaison selon la revendication 8, **caractérisé en ce que** la douille (34) est munie d'une collerette (35) saillant extérieurement à un bord de la douille.

10. Dispositif ou ensemble de liaison selon l'une quelconque des revendications 1 à 9, **caractérisé en ce que** la rondelle (27) est conique, et le perçage (21) de la première des joues (20) est conique avec un même angle de conicité.

11. Dispositif ou ensemble de liaison selon l'une quelconque des revendications 1 à 10, **caractérisé en ce que** le perçage (21) d'une première des joues (20) a un rayon plus grand que le perçage (23) d'une seconde des joues (22).

12. Dispositif ou ensemble de liaison selon l'une quelconque des revendications 1 à 11, **caractérisé en ce que** la rondelle (27) est séparée du boulon (16).

13. Dispositif ou ensemble de serrage selon la revendication 12, **caractérisé en ce qu'**une tête (24) du boulon est en appui/apte à venir en appui sur la rondelle.

14. Structure d'aéronef, **caractérisée en ce qu'**elle comporte un dispositif de liaison et/ou un ensemble de liaison selon l'une quelconque des revendications précédentes.

## Patentansprüche

1. Vorrichtung zur Verbindung zwischen einem ersten Teil (2), das einen Gabelkopf (19) mit zwei Backen (20, 22) trägt, die mit Bohrungen (21, 23) versehen sind, die in einer Linie angeordnet sind, und einem zweiten Teil (5) mit Anschlussstück (7), das mit einer Bohrung (18) versehen ist, wobei die Vorrichtung in einem Montagezustand der Verbindung einen Bolzen (16) umfasst, von dem ein Stift (17) die Bohrungen (21, 23) der Backen (20, 22) und die Bohrung (18) des Anschlussstücks (7) durchquert, das zwischen den Bohrungen der Backen in einer axialen Richtung ausgerichtet ist, wobei der Bolzen (16) auf beiden Seiten der Backen eingeklemmt ist; und die Vorrichtung **dadurch gekennzeichnet ist, dass**: eine Unterlegscheibe (27), auf der der Bolzen (16) aufliegt, in die Bohrung der ersten der Backen (20) eindringt; und die Vorrichtung noch eine Ringdichtung (28) umfasst, die im Verbindungszustand in der Bohrung (18) des Anschlussstücks (7) befestigt ist, die Dichtung (28) einen verformbaren Ring (29) umfasst, der mit einer Ausnehmung (36) versehen ist, die vom Stift des Bolzens durchquert wird, wobei der Ring (29) im Montagezustand radial gegen den Stift (17) des Bolzens geklemmt ist und axial zwischen die Unterlegscheibe (27) und die zweite der Backen (22) geklemmt ist, wobei der Ring (29) Axialenden (32, 33) aufweist, die in der Axialrichtung mit einem Zwischenabschnitt des Rings ausgerichtet sind, der in der Axialrichtung vom Anschlussstück (7) des zweiten Teils (5) hervorsteht und Querschnitte aufweist, die sich in Richtung des Zwischenabschnitts des Rings allmählich verbreitern.

2. Verbindungsanordnung umfassend eine Verbindungsvorrichtung nach Anspruch 1, wobei das erste Teil ein Distanzstück mit zwei gegenüberliegenden Enden ist, wobei das Distanzstück an wenigstens einem der Enden den Gabelkopf (19) mit zwei parallelen Backen (20, 22) umfasst, die mit den Bohrungen (21, 23) versehen sind, die in einer axialen Richtung in einer Linie angeordnet sind; wobei der Ring ein erstes Axialende mit kleinerem Radius als die Bohrung der ersten der Backen und ein zweites Axialende mit größerem Radius als die Bohrung der zweiten der Backen aufweist.

3. Verbindungsvorrichtung oder -anordnung nach Anspruch 1 oder 2, **dadurch gekennzeichnet, dass** die Querschnitte der Axialenden (32, 33) des Rings abgerundet sind.

4. Verbindungsvorrichtung oder -anordnung nach einem der Ansprüche 1 bis 3, **dadurch gekennzeichnet, dass** der Ring (29) einen ungefähr ellipsenförmigen Querschnitt aufweist, wobei der Zwischenabschnitt von einer radial inneren zylinderförmigen Seite (30), die geradlinig in axialer Richtung (X-X) des Rings verläuft, und einer radial äußeren zylinderförmigen Seite (31), die geradlinig in axialer Richtung des Rings verläuft, begrenzt ist, und die Axialenden des Rings kreisförmige Scheitellinien aufweisen, die in einer radialen Richtung näher an der radial inneren zylinderförmigen Seite (30) als an der radial äußeren zylinderförmigen Seite (31) liegen.

5. Verbindungsvorrichtung oder -anordnung nach einem der Ansprüche 1 bis 4, **dadurch gekennzeichnet, dass** der Ring (29) in einem freien Zustand eine Länge in der Axialrichtung aufweist, die größer als ein Abstand zwischen den Backen (20, 22) des Gabelkopfes ist.

6. Verbindungsvorrichtung oder -anordnung nach einem der Ansprüche 1 bis 5, **dadurch gekennzeichnet, dass** der Stift (17) des Bolzens einen Radius aufweist, der in einem abmontierten Zustand der Verbindung, in dem der Ring (29) nicht gegen die Unterlegscheibe (27) geklemmt ist, kleiner als ein Radius der Ausnehmung (36) des Rings (29) ist.

7. Verbindungsvorrichtung oder -anordnung nach einem der Ansprüche 1 bis 6, **dadurch gekennzeichnet, dass** der Ring aus einem im Wesentlichen nicht zusammendrückbaren Material ist, insbesondere aus Gummi oder Elastomer.

8. Verbindungsvorrichtung oder -anordnung nach einem der Ansprüche 1 bis 7, **dadurch gekennzeichnet, dass** die Dichtung eine Buchse (34) umfasst, die den Ring (29) umgibt, an welcher der Ring befestigt ist und die im Montagezustand der Vorrichtung spielfrei in die Bohrung (18) des Anschlussstücks (7) eingreift.

9. Verbindungsvorrichtung oder -anordnung nach Anspruch 8, **dadurch gekennzeichnet, dass** die Buchse (34) mit einem Kragen (35) versehen ist, der außen an einem Rand der Buchse hervorsteht.

10. Verbindungsvorrichtung oder -anordnung nach einem der Ansprüche 1 bis 9, **dadurch gekennzeichnet, dass** die Unterlegscheibe (27) kegelförmig ist und die Bohrung (21) der ersten der Backen (20) im gleichen Konizitätswinkel kegelförmig ist.

11. Verbindungsvorrichtung oder -anordnung nach einem der Ansprüche 1 bis 10, **dadurch gekennzeichnet, dass** die Bohrung (21) einer ersten der Backen (20) einen Radius aufweist, der größer als die Bohrung (23) einer zweiten der Backen (22) ist.

12. Verbindungsvorrichtung oder -anordnung nach einem der Ansprüche 1 bis 11, **dadurch gekennzeichnet, dass** die Unterlegscheibe (27) vom Bolzen (16) getrennt ist.

13. Verbindungsvorrichtung oder -anordnung nach Anspruch 12, **dadurch gekennzeichnet, dass** ein Kopf (24) des Bolzens an der Unterlegscheibe anliegt bzw. geeignet ist, an ihr anzuliegen.

14. Luftfahrzeugstruktur, **dadurch gekennzeichnet, dass** sie eine Verbindungsvorrichtung und/oder eine Verbindungsanordnung nach einem der vorhergehenden Ansprüche aufweist.

## Claims

1. Connecting device between a first component (2), bearing a clevis (19) with two cheeks (20, 22) having aligned piercings (21, 23), and a second component (5) with a coupling (7) having a piercing (18), the device comprising, in a connection mounting state, a bolt (16) of which a rod (17) passes through the piercings (21, 23) of the cheeks (20, 22) and the piercing (18) of the coupling (7) aligned between the piercings of the cheeks in an axial direction, the bolt (16) being tightened on either side of the cheeks; and the device being **characterized in that**: a washer (27), on which the bolt (16) bears, penetrates into the piercing of the first of the cheeks (20); and the device comprises also an annular seal (28) which, in the connection mounting state, is fixed in the piercing (18) of the coupling (7), said seal (28) comprising a deformable ring (29) with a hole (36) that is passed through by the rod of the bolt, said ring (29) being tightened radially against the rod (17) of the bolt and tightened axially between the washer (27) and a second of the cheeks (22) in the mounting state, the ring (29) comprising axial ends (32, 33) in alignment with an intermediate part of the ring in the axial direction, which protrude out of the coupling (7) of the second component (5) in the axial direction and which have cross-sections progressively flaring towards the intermediate part of the ring.

2. Connecting assembly comprising a connecting device according to Claim 1, said first component being a spacer with two opposing ends, wherein the spacer comprises, at at least one of the ends, said clevis (19) with two parallel cheeks (20, 22) having said piercings (21, 23) aligned in an axial direction; the ring having a first axial end of smaller radius than the piercing of the first of the cheeks, and a second axial end of greater radius than the piercing of the second of the cheeks.

3. Connecting device or connecting assembly according to Claim 1 or 2, **characterized in that** the cross-sections of the axial ends (32, 33) of the ring are rounded.

4. Connecting device or connecting assembly according to any one of the Claims 1 to 3, **characterized in that** the ring (29) has an approximately elliptical section in which the intermediate part is delimited by a radially inner cylindrical side (30) that is rectilinear in the axial direction (X-X) of the ring and a radially outer cylindrical side (31) that is rectilinear in the axial direction of the ring, and the axial ends of the ring have apex circular lines which are nearer, in a radial direction, to the radially inner cylindrical side (30) than the radially outer cylindrical side (31).

5. Connecting device or connecting assembly according to any one of the Claims 1 to 4, **characterized in that** the ring (29) has, in a free state, a length, in the axial direction, greater than a distance between the cheeks (20, 22) of the clevis.

6. Connecting device or connecting assembly according to any one of the Claims 1 to 5, **characterized in that** the rod (17) of the bolt has a smaller radius than a radius of the hole (36) of the ring (29) in a state of dismantling of the connection, in which the ring (29) is not tightened against the washer (27).

7. Connecting device or connecting assembly according to any one of the Claims 1 to 6, **characterized in that** the ring is made of an essentially incompressible material, like rubber or elastomer.

8. Connecting device or connecting assembly according to any one of the Claims 1 to 7, **characterized in that** the seal comprises a bushing (34) surrounding the ring (29), to which the ring is fixed, and which is fitted without play in the piercing (18) of the coupling (7) in the state of mounting of the device.

9. Connecting device or connecting assembly according Claim 8, **characterized in that** the bushing (34) comprises a flange ring (35) protruding outward from an edge of the bushing.

10. Connecting device or connecting assembly according to any one of the Claims 1 to 9, **characterized in that** the washer (27) has a tapered outer edge, and the piercing (21) of the first of the cheeks (20) has a tapered edge of the same taper angle.

11. Connecting device or connecting assembly according to any one of the Claims 1 to 10, **characterized in that** the piercing (21) of a first of the cheeks (20) has a greater radius than the piercing (23) of a second of the cheeks (22).

12. Connecting device or connecting assembly according to any one of the Claims 1 to 11, **characterized in that** the washer (27) is separate from the bolt (16).

13. Connecting device or connecting assembly according to Claim 12, **characterized in that** a head (24) of the bolt bears or can come to bear on the washer.

14. Aircraft structure, **characterized in that** it comprises a connecting device and/or a connecting assembly according to any one of the previous Claims.
